# EUROPÄISCHE PATENTSCHRIFT

(11) **EP 0 627 200 B1**
(45) Veröffentlichungstag und Bekanntmachung des Hinweises auf die Patenterteilung: **17.02.1999**
(21) Anmeldenummer: 94105526.1
(22) Anmeldetag: 09.04.1994
(51) Int. Cl.: A61C 5/06

(54) **Mischkapsel für Dentalmassen**
Mixing capsule for dental substances
Capsule mélangeuse pour produits dentaires

(30) Priorität: 12.05.1993 DE 4315920
(43) Veröffentlichungstag der Anmeldung: 07.12.1994
(73) Patentinhaber: IVOCLAR AG, FL-9494 Schaan (LI)
(72) Erfinder: Frick, Hansjörg, FL-9494 Schaan (LI); Kunkel, Peter, FL-9495 Triesen (LI)
(74) Vertreter: Baronetzky, Klaus, Dipl.-Ing.

(56) Entgegenhaltungen:
- DE-A- 2 060 626
- DE-A- 3 920 537
- US-A- 3 921 633

## Beschreibung

Die Erfindung betrifft eine Mischkapsel für Dentalmassen, gemäß dem Oberbegriff von Anspruch 1. Eine Mischkapsel mit den Merkmalen des Oberbegriffs von Anspruch 1 ist aus der DE-A-2024331 (Fig.5) bekannt.

Aus der DE-OS 20 60 626 ist eine derartige Mischkapsel für Dentalmassen bekannt. Eine derartige Mischkapsel weist einen Hohlkolben auf, in dem ein Stempel geführt ist, wobei der Hohlkolben eine in der Regel flüssige Substanz aufnimmt, die durch eine zerreißbare Folie von einer pulverförmigen Substanz getrennt ist, die in der Mischkammer aufgenommen ist. Durch Eindrücken des Stempels wird die Folie zerrissen und die in der Regel flüssige Substanz wird aus dem Hohlkolben ausgedrückt und gelangt ebenfalls in die Mischkammer, so daß sie mit einer automatischen Schwingmischvorrichtung, beispielsweise einem sogenannten Amalgammischer, miteinander vermischt werden können.

Es ist wichtig, daß der Kolben beim Hereindrücken des Stempels nicht ebenfalls - auch nur um weniges - in die Mischkammer hereingedrückt wird. Andernfalls besteht die Gefahr, daß das Mischkammervolumen derart verkleinert wird, daß eine vollkommene Mischung der Komponenten, z.B. eines Befestigungszements, nur begrenzt möglich ist und der Zement nicht zu verantwortende Qualitätseinbußen erleidet.

Zur Lösung dieses Problems ist es in der DE-OS 20 60 626 vorgeschlagen worden, den Kolben mit seitlichen Vorsprüngen zu versehen, wobei das Hereindrücken des Stempels so erfolgen soll, daß die Vorsprünge eine Art Gegengriff bilden, der mit zwei Fingern gehalten werden soll, während der Stempel eine Daumenauflage aufweist.

Diese Lösung ist zwar im Grunde insofern günstig, nachdem sie der natürlichen Handhaltung beim Ausdrücken einer Spritze entgegenkommt. Nachdem die Mischkammer selbst zur Entleerung ebenfalls entsprechende Vorsprünge aufweist, besteht bei einer Unachtsamkeit oder bei der Bedienung durch neu anzulernende Kräfte die Gefahr, daß versehentlich die Vorsprünge der Mischkammer anstelle der Vorsprünge des Hohlkolbens als Gegengriff dienen, was möglicherweise sogar unbemerkt bleibt.

Daneben ist es beispielsweise aus der DE-OS 20 24 331 bzw. der DE-OS 19 39 316 bekannt, einen Hohlkolben gegen die Mischkammer mit einem Halte- oder Sprengring abzustützen. Der Sprengring wird vor dem Ausbringen des fertig gemischten Zahnzements oder Amalgams mit der üblichen Sprengringzange entfernt, so daß der Hohlkolben dann frei verschieblich ist und eingedrückt werden kann.

Bei dieser Lösung ist nachteilig, daß der Kolben zusammen mit der gegebenenfalls darin befindlichen Flüssigkeit nicht unverlierbar gehalten ist. Zwar weist der Stempel Dichtlippen gegen den Hohlkolben auf, so daß dort keine Flüssigkeit austreten kann. Wenn jedoch der Stempel bereits eingedrückt ist, kann je nach Handhabung eine Relativbewegung zwischen Kolben und Mischkammer entstehen - zumal die gesamte Mischkapsel in dem Amalgammischer stark beschleunigt wird - und auch wenn diese nur gering ist, kann es vorkommen, daß Flüssigkeit in den Spalt zwischen Mischkammer und Kolben hereinleckt, was wiederum zu unerwünschten Verunreinigungen führen kann.

Eine Vielzahl von anderen Mischkapseln ist ebenfalls vorgeschlagen worden, wobei als Beispiel auf die Mischkapsel gemäß der DE-OS 37 18 326 verwiesen sei. Bei dieser Mischkapsel ist ein Kolben stets vollständig in der Mischkammer aufgenommen. Von außen ist nicht ohne weiteres erkennbar, in welchem Zustand sich die Mischkapsel befindet, ob also beispielsweise das die Flüssigkeit aufnehmende Folienkissen bereits zerplatzt ist, oder ob der Kolben lediglich etwas eingedrückt wurde. Die Mischkapsel ist lediglich dann sicher, wenn sie sich in dem Betätigungsgerät befindet. Wenn in der Praxis aber mehrere Mischkapseln vorbereitet werden sollen, müßten praktisch mehrere Betätigungsgeräte angeschafft werden. Darüberhinaus besteht die Gefahr, daß, wenn die Kapsel doch in einen üblichen Amalgammischer nach Eindrücken des Stempels eingesetzt wird, der Kolben sich doch ein wenig nach innen verschiebt, so daß gerade der Spalt zwischen Kolben und Stempel in den Bereich der Eingriffsöffnung gelangt, was wiederum Verunreinigungsmöglichkeiten heraufbeschwört.

Daher liegt der Erfindung die Aufgabe zugrunde, eine Mischkapsel gemäß dem Oberbegriff von Anspruch 1 zu schaffen, die in der Praxis bediensicher ist und Verunreinigungen sicher verhindert, ohne daß die vorhandenen automatischen Schwingvorrichtungen durch Neukonstruktionen ersetzt werden müssen.

Diese Aufgabe wird erfindungsgemäß durch Anspruch 1 gelöst. Vorteilhafte Weiterbildungen ergeben sich aus den Unteransprüchen.

Überraschend läßt sich mit dem erfindungsgemäßen manuell entfernbaren Sperrglied die erfindungsgemäße Mischkapsel weit betriebssicherer als bisher an den vorhandenen Schwingvorrichtungen betreiben, wobei auch hinsichtlich der Betriebsabläufe eine eindeutige und Bedienungsfehler ausschließende Erkennbarkeit des Zustands der Mischkapsel gewährleistet ist. Da das Sperrglied in eine spezielle Aussparung in dem Hohlkolben eingreift, ist die Stellung des Kolbens stets arretiert und eindeutig identifizierbar, so daß die Stellung des Kolbens beim Einbringen in die automatische Schwingvorrichtung klar ersichtlich ist. Andererseits wird durch die Arretierung durch das Sperrglied eine Mikrobewegung des Kolbens entgegen den erheblichen Beschleunigungskräften der Schwingvorrichtung sicher verhindert, so daß auch noch nicht fertig vermischtes Flüssigkeit nicht austreten kann. Ferner wird eine vorzeitige Verschiebung des Kolbens während des Mischvorgangs ausgeschlossen, wobei nach dem Mischen die Fixierung des Kolbens in einfachster Weise manuell lösbar ist.

Zudem ist die erfindungsgemäße Mischkapsel sehr preisgünstig, nachdem das Sperrglied als einfaches, wegwerfbares und aufsteckbares separates Teil ausgebildet ist, das weder mit der Mischkapsel noch mit einer Ausbringvorrichtung fest verbunden ist. Trotz seiner Mehrfachfunktionen kann es so leicht ausgebildet sein, daß es die Schwingfrequenz der Schwingvorrichtung nicht oder nur unwesentlich reduziert.

Besonders günstig ist es, daß der Kolben zusammen mit dem Stempel als komplette Einheit einschließlich der in eine Folie einbringbaren Flüssigkeit vorgefertigt werden kann, so daß diese Einheit erst zuletzt, d.h., wenn auch die Mischkammer mit dem erforderlichen Pulver befüllt ist und eine Verschlußstange eingebracht ist, in die Mischkammer eingeschoben wird. Sobald dann das erfindungsgemäße Sperrglied eingeschoben und/oder eingerastet ist, liegt eine sichere und kontaminationsgeschützte Einheit vor, bei der die bei der Anwendung zu vermischenden Komponenten sicher getrennt sind.

In diesem Zusammenhang versteht es sich, daß die Reibung zwischen dem Stempel und dem Kolben so groß gewählt ist, daß ein versehentliches Eindrücken des Stempels nicht möglich ist. Dies kann in an sich bekannter Weise durch eine entsprechende Passung sichergestellt werden.

Durch eine glockenförmige Ausbildung des Kolbens ist sowohl die flüssige Mischkomponente als auch der Stempel durch die massive Kolbenwand und den massiven Kolbenboden sicher geschützt.

Es sind unterschiedliche Ausgestaltungen der Erfindung möglich, um den erforderlichen Formschluß zwischen der Mischkammer und dem Kolben über das erfindungsgemäße Sperrglied zu realisieren. So kann der Kolben außen eine Schulter aufweisen, die nach unten, d.h. zur Ausbringöffnung hin weist und insofern dem unerwünschten Eindringen des Kolbens in die Mischkammer entgegenwirkt. Umgekehrt kann durch eine nach oben, d.h. zum Ende des Stempels hin weisende Schulter der versehentliche Auszug oder ein Herausgleiten des Kolbens aus der Mischkammer verhindert werden. Insofern ist es besonders günstig, wenn die beiden einander in axialer Richtung benachbarten Schultern an einer Aussparung vorgesehen sind, die gegenüber der Kolbenoberfläche zurücktritt, also etwa einer Vertiefung oder einer Nut, wobei es bevorzugt ist, daß diese Aussparung nicht als Durchtrittsausnehmung ausgebildet ist und insofern die Kolbenwand nicht durchtritt.

Gemäß einer weiteren bevorzugten Ausgestaltung ist das Sperrglied an zwei gegenüberliegenden Seiten abgestützt. Durch die insofern symmetrisch einwirkenden Kräfte besteht keine Verkantungstendenz, wenn der Kolben gegen die Wirkung des Sperrglieds unter Druck gesetzt wird. Es versteht sich, daß die Abstützung nicht auf gleicher Höhe an gegenüberliegenden Seiten erfolgen muß; vielmehr kann gewünschtenfalls auch ein Höhenversatz eingeführt werden.

Bevorzugt weist das Sperrglied eine Greifhandhabe auf, die die rasche und eindeutig identifizierbare Lösung des Sperrglieds ermöglicht. Nachdem insofern keine Verzögerung bei der Bereitstellung des fertig gemischten Zahnzements oder der sonstigen Dentalmasse eintritt, wird die zur Verfügung stehende Bearbeitungszeit nicht reduziert.

Bevorzugt ist das Sperrglied in seiner Form an den Mischkolben angepaßt und verläuft in einen Schlitz der Mischkammerwand. Diese Ausgestaltung erlaubt einen trotz der sicheren Stabilisierung geringen Materialeinsatz für das Sperrglied. Es versteht sich, daß das Sperrglied und zugehörige Aussparungen oder Vertiefungen in dem bevorzugt als Hohlkolben ausgebildeten Kolben untereinander angepaßt sein sollten.

Es versteht sich, daß sowohl in dem Innenraum des Hohlkolbens als auch in dem nicht von dem Kolben überdeckten Innenraum der Mischkammer ausreichend Freiräume bestehen sollten, um die maximal auftretenden Mengen der zu mischenden Bestandteile je aufzunehmen, wobei der Freiraum in der Mischkammer zusätzlich zur Aufnahme des pulverförmigen auch für die Aufnahme des flüssigen Bestandteils dimensioniert sein muß und beim Mischen in dem Schwinggabelmischer ausreichend Freiraum für das Mischen zur Verfügung steht.

Gemäß einer weiteren bevorzugten Ausgestaltung ist ein Aktivierschutz vorgesehen, der aus einer Hüllfolie besteht, die den Stempel überragt. Die beispielsweise durchsichtige oder durchscheinende Hüllfolie läßt erkennen, ob der Stempel um weniges eingedrückt ist, wozu sie aus einem elastischen Material wie Silikon-Kautschuk ausgebildet sein kann. Gemäß einer weiteren Abwandlung besteht die Aktivierschutzfolie aus einem spröden, lackartigen Überzug. Eine Aktivierung des Stempels ist dann nicht möglich, ohne den Überzug zu zerstören, so daß aus der Unversehrtheit des Überzugs geschlossen werden kann, daß die Mischkapsel insgesamt im unversehrten Zustand vorliegt.

Besonders günstig ist es aber auch, daß unabhängig von der Aktivierschutzfolie bereits der nicht eingedrückte Stempel die Bereitschaft der Mischkapsel signalisiert. Hierbei ist es besonders günstig, daß der Stempel in dem Kolben relativ schwergängig ist; sobald er einmal eingedrückt ist, kann er ohne Werkzeuge nicht mehr herausgezogen werden. Der Stempel dient somit zugleich der Signalisierung der Betriebsbereitschaft, ohne daß es aufgrund der erhöhten Reibung zwischen Stempel und Kolben erforderlich wäre, die Reibung zwischen Kolben und Mischkammer noch größer zu machen und damit die Einsetzbarkeit in einem handelsüblichen Dispenser in Frage zu stellen.

Weitere Einzelheiten, Vorteile und Merkmale ergeben sich aus der nachfolgenden Beschreibung zweier Ausführungsbeispiele der Erfindung anhand der Zeichnungen. Es zeigen:
- Fig. 1: eine Schnittansicht einer erfindungsgemäßen Mischkapsel in einer ersten Ausführungsform in dem fertig montierten Zustand, jedoch vor der Aktivierung;
- Fig. 2: eine leicht modifizierte Ausgestaltung der Mischkapsel gemäß Fig. 1, wobei die Mischkapsel zudem aktiviert ist;
- Fig. 3: die Ausgestaltung der Mischkapsel gemäß Fig. 2, wobei die Mischkapsel bereits ausgepreßt ist;
- Fig. 4: ein Schnitt durch die Ausgestaltung der Mischkapsel gemäß Fig. 2, jedoch in dem noch nicht aktivierten Zustand; und
- Fig. 5: ein Schnitt entlang der Linie V - V aus Fig. 4.

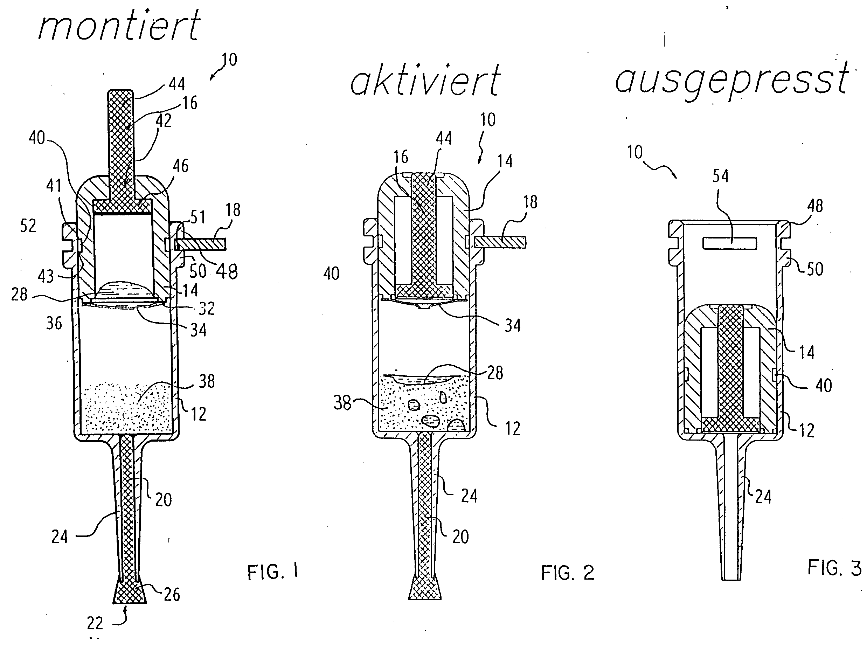

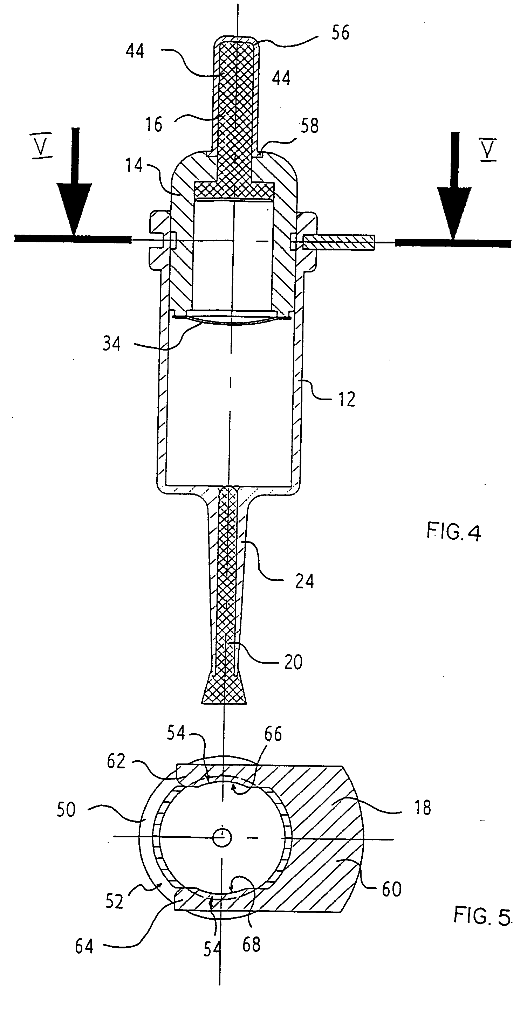

Eine Mischkapsel 10 ist in einer Ausführungsform in Fig. 1 im Schnitt dargestellt. Die Mischkapsel 10 weist eine Mischkammer 12, einen als Hohlkolben ausgebildeten Kolben 14 und einen Stempel 16 auf. Erfindungsgemäß wird der Kolben 14 an der Mischkammer 12 über ein Sperrglied 18 arretiert, dessen Ausgestaltung aus Fig. 5 besser ersichtlich ist.

Die Mischkammer 12 ist unten mit einem Verschlußstab 20 abgeschlossen, der vor dem Ausbringen der fertigen Mischung entfernt wird.

Die Mischkammer 12 läuft hierzu unten in einer Ausbringöffnung 22 aus, die nach unten hin in einem Ausspritzkanal 24 nach der Art einer Spritze bzw. in Kanülenform verlängert ist. Der Ausspritzkanal 24 weist einen über seine Länge im wesentlichen gleichbleibenden Querschnitt auf, während sich sein Außendurchmesser zur Spitze hin verjüngt.

Der Verschlußstab 20 weist ebenfalls im wesentlichen den gleichen Außendurchmesser über seine Länge auf, wobei die Bemaßung von Verschlußstab 20 und Ausspritzkanal 24 so gewählt ist, daß im eingeschobenen Zustand des Verschlußstabs ein sicheres und luftdichtes Abschließen gewährleistet ist.

Der Verschlußstab 20 endet unten an einer Verdickung 26, die eine axial weisenden Ringnut aufweist, in die die Spitze des Ausspritzkanals 24 eintritt und dort eine zusätzliche Liniendichtung bildet. Daneben dient die Verdickung 26 als Handhabe für das Ausziehen des Verschlußstabs 20, bevor der fertige Zahnzement ausgebracht werden soll.

In dem in Fig. 1 dargestellten Zustand ist fließfähige, insbesondere flüssige Substanz 28 wie z.B. phosphorsaure Zahnzementflüssigkeit in den Kolben 14 eingebracht. Ein kreisförmiger Rand 32 der Folie 34 ist auf einen nach unten axial vorstehenden Ringvorsprung 36 des Hohlkolbens 14 aufgeklebt oder aufgeschweißt. In radialer Richtung springt der Ringvorsprung 36 sowohl nach innen als auch nach außen gegenüber der Wand des Hohlkolbens 14 zurück. Damit läßt sich eine sichere Verbindung unbeeinflußt von dem Gleiten des Hohlkolbens 14 in der Mischkammer 12 sicherstellen.

Die Folie 34 weist in an sich bekannter Weise eine Sollbruchstelle auf. Die Haltekraft der Sollbruchstelle ist deutlich geringer als die Festigkeit der Klebe- oder Schweißverbindung zwischen dem Ringvorsprung 36 und dem Rand 32, so daß beim Aktivieren gemäß Fig. 2, also dem Eindrücken des Stempels 16 die Folie 34 sicher aufplatzt, wie es in Fig. 2 dargestellt ist, und sich sein Inhalt in die Mischkammer 12 ergießt.

Die Mischkammer 12 nimmt in dem vorbereiteten Zustand gemäß Fig. 1 eine pulverförmige Substanz 38 auf, wie Silikatzementpulver, Zinkoxid oder ähnliches. Der Hohlraum, den die Mischkammer 12 bildet, ist hierbei so bemessen, daß auch bei dem maximal vorgesehenen Füllvolumen stets mehr als die Hälfte des Hohlraums ungefüllt verbleibt, so daß später eine gute Durchmischung möglich ist.

Der Hohlkolben 14 ist im wesentlichen glockenförmig ausgebildet und weist eine relativ massive Wandstärke wie auch einen massiven oben liegenden Boden auf. Im Beispielsfalle ist eine Ringnut 40 außen etwa in der Mitte seiner Höhe ausgebildet, die für das Eingreifen des Sperrglieds 18 vorgesehen ist. Während hier die Ringnut 40 U-förmig ausgebildet ist, ist beispielsweise auch eine V-förmige Ausgestaltung möglich, wobei wesentlich ist, daß so wenig wir möglich axiales Spiel zwischen dem Sperrglied 18 und der Ringnut 40 besteht, dennoch aber ein sicheres Einrasten des Sperrglieds 18 möglich ist. Die Ringnut 40 bildet insofern gegen das Sperrglied 18 oben einen nach unten weisenden Absatz 41 und unten einen nach oben weisenden Absatz 43.

Der Hohlkolben 14 weist eine Durchtrittsausnehmung 42 für den Stempel 16 auf, die in ihrem Durchmesser an den Durchmesser der Stempelstange 44 angepaßt ist. Der Innendurchmesser des Hohlkolbens 14 ist wiederum in seinem Durchmesser an den Durchmesser des dort angeordneten Stempelkolbens 46 angepaßt.

Der Stempel 16 ist in seiner Länge ebenfalls an die Länge des Hohlkolbens 14 angepaßt, wie es besser aus Fig. 2 ersichtlich ist, so daß beim vollständigen Eindrücken des Stempels 16 die flüssige Substanz 28 sicher aus dem Hohlkolben 14 ausgetrieben wird.

Das Sperrglied 18 ist am oberen Ende der Mischkammer 12 zwischen zwei Ringwülsten 48 und 50 gehalten. Die Ringwülste 48 und 50 belassen zwischen sich eine Ringnut 52, deren Nutgrund an zwei gegenüberliegenden Stellen - wie es besser aus Fig. 5 ersichtlich ist - durchbrochen ist, so daß das Sperrglied 18 dort in Eingriff mit der Ringnut 40 gelangen kann. Die untere Ringwulst 50 weist hierbei eine nach oben weisende Stützfläche 51 auf, auf die das Sperrglied 18 abgestützt ist.

Fig. 2 zeigt einen aktivierten Zustand der in Fig. 1 dargestellten Mischkapsel 10. Gleiche Bezugzeichen beziehen sich hier wie auch in den weiteren Figuren auf gleiche Teile. In diesem Zustand ist der Stempel 16 vollständig eingedrückt, so daß das obere Ende der Stempelstange 44 bündig mit dem oberen Ende des Hohlkolbens 14 ist. Die Folie 34 ist aufgeplatzt und hat die flüssige Substanz 28 freigegeben, so daß sie sich bereits mit der pulverförmigen Substanz 38 in der Mischkammer 12 etwas vorvermischt hat oder zumindest auf dieser aufliegt. Das Sperrglied 18 verbleibt in der Ringnut 40 und der Verschlußstab 20 verbleibt eingeschoben in dem Ausspritzkanal 24. In diesem Zustand wird die erfindungsgemäße Mischkapsel 10 in eine Mischvorrichtung, die hier nicht dargestellt ist, eingebracht, die aufgrund einer Schwingbewegung eine intensive Durchmischung der festen und der flüssigen Substanz zur Erzeugung einer Amalgammischung oder eines Zahnzements oder dergleichen bewirkt.

Nach Ablauf der Mischzeit wird die erfindungsgemäße Mischkapsel 10 zweckmäßig in einen ebenfalls nicht dargestellten Dispenser eingebracht. Zuvor wird sowohl das Sperrglied 18 als auch der Verschlußstab 20 je manuell entfernt und verworfen. Die fertige Mischung kann dann ausgebracht werden, wobei der vollständig ausgepreßte Zustand in Fig. 3 dargestellt ist. In diesem Zustand ist der Kolben 14 samt dem darin befindlichen Stempel 16 vollständig in die Mischkammer 12 eingeschoben und liegt an deren unterem Ende an.

Aus Fig. 3 ist ferner ersichtlich, daß der Nutgrund der Ringnut 52 eine schlitzförmige Öffnung 54 aufweist, die für den Durchtritt des Sperrglieds 18 vorgesehen ist.

In Fig. 4 ist eine etwas modifizierte Ausgestaltung einer erfindungsgemäßen Mischkapsel dargestellt. Diese Ausgestaltung weist eine Aktivierschutzfolie 56 auf, die sich im montierten Zustand vollständig über den freiliegenden Teil der Stempelstange 44 erstreckt. Wenn die Aktivierschutzfolie 54 unversehrt ist, kann davon ausgegangen werden, daß auch die Folie 34 unversehrt ist, so daß die Mischkapsel 10 für den Gebrauch zur Verfügung steht. Die Aktivierschutzfolie 56 ist an ihrem Fuß 58 an dem oberen Ende des Hohlkolbens 14 befestigt, beispielsweise verklebt oder verschweißt, wozu an dieser Stelle eine entsprechenden Vertiefung vorgesehen ist.

In Fig. 4 ist weder die Dentalmasse 28 noch die Dentalmasse 38 dargestellt. Auch ist lediglich die untere Folie 34 angedeutet. Grundsätzlich könnte auch ein an sich bekanntes Folienkissen verwendet werden, das jedoch in der Praxis regelmäßig nicht vollständig entleert werden kann.

Ein Schnitt durch die Linie V - V in Fig. 4 ist in Fig. 5 dargestellt. Dort ist ersichtlich, daß das Sperrglied 18 eine Greifhandhabe 60 aufweist, die als Platte ausgebildet ist. Grundsätzlich ist das Sperrglied 18 im wesentlichen U-förmig ausgebildet, wobei zwei Seitenschenkel 62 und 64 dem Eingriff in die Ringnut 40 dienen. Hierzu durchtreten die Seitenschenkel 62 und 64 je Öffnungen 54 in der Ringnut 52 zwischen den Ringwülsten 48 und 50 der Mischkammer 12. Die Öffnungen 54 liegen einander symmetrisch gegenüber und die Seitenschenkel 54 weisen je Ausrundungen 66 und 68 auf, die in ihrem Radius an den Radius des Nutgrunds der Ringnut 40 angepaßt sind. Mit diesen Ausrundungen rastet das Sperrglied 18 an dem Hohlkolben 14 ein, so daß es unverlierbar gehalten ist und nur durch manuelles Ziehen an der Greifhandhabe 60 entfernt werden kann.

Es ist bevorzugt, daß die Greifhandhabe 60 ebenfalls in einen Radius ausläuft, so daß einerseits ein sicheres Greifen möglich ist, andererseits das Sperrglied 18 sich so eng wie möglich an die Mischkapsel 10 anlehnt. Das Gewicht des Sperrglieds 18 ist gegenüber dem Gewicht der Mischkapsel 10 im übrigen vernachlässigbar.

## Patentansprüche

1. Mischkapsel für Dentalmassen, mit einer Mischkammer, in welcher ein Kolben (14) schiebebeweglich geführt ist, wobei in dem Kolben (14) ein Stempel (16) schiebebeweglich angeordnet ist, und die Mischkammer (12) eine Ausbringöffnung (22) aufweist, über welche die Dentalmasse ausbringbar ist, wobei bei Druck auf den Stempel (16) eine Schiebebewegung zwischen dem Kolben (14) und dem Stempel (16) einerseits und der Mischkammer (12) und dem Kolben (14) andererseits zur Ausbringung der Dentalmasse erfolgt, wobei der Kolben (14) mindestens eine Aussparung (40) aufweist, in welche ein für die Ausbringung der Dentalmasse (28, 38) manuell entfernbares Sperrglied (18) eingreift, dadurch gekennzeichnet, daß das Sperrglied (18) im wesentlichen U-förmig ausgebildet ist und der Mittelschenkel des Sperrglieds (18) zur Bildung einer Greifhandhabe (60) verlängert ist und daß eine umlaufende Ringnut (52) an der Mischkammer (12) ausgebildet ist, in welche das Sperrglied (18) mit zwei Seitenschenkeln (54) aufnehmbar ist.

2. Mischkapsel nach Anspruch 1, dadurch gekennzeichnet, daß die Aussparung als Ringnut (40) ausgebildet ist und das Sperrglied (18) als Wegwerfteil ausgebildet ist.

3. Mischkapsel nach einem der vorhergehenden Ansprüche, dadurch gekennzeichnet, daß das Sperrglied (18) ein in die Aussparung (40) steckbares und insbesondere in die Ringnut einrastbares, von der Mischkapsel (12) und auch einer Ausbringvorrichtung getrennt vorliegendes Teil ist.

4. Mischkapsel nach einem der vorhergehenden Ansprüche, dadurch gekennzeichnet, daß die Aussparung (40) einen Absatz (41) mit einer nach unten, d.h. zur Ausbringöffnung (22) weisenden Schulter außen an dem Kolben (14) aufweist.

5. Mischkapsel nach einem der vorhergehenden Ansprüche, dadurch gekennzeichnet, daß die Aussparung (40) einen Absatz (43) mit einer nach oben, d.h. zum Ende des Stempels (16) hin weisenden Schulter außen an dem Kolben (14) aufweist.

6. Mischkapsel nach einem der vorhergehenden Ansprüche, dadurch gekennzeichnet, daß das Sperrglied (18) den Kolben (14) an zwei gegenüberliegenden Seiten an einem Absatz (41; 43) abstützt.

7. Mischkapsel nach einem der Ansprüche 1 bis 6, dadurch gekennzeichnet, daß das Sperrglied (18) den Kolben (14) an zwei gegeneinander versetzten Stellen abstützt.

8. Mischkapsel nach einem der vorhergehenden Ansprüche, dadurch gekennzeichnet, daß die Mischkammer (12) seitlich eine Durchtrittsöffnung (54) aufweist, die von dem Sperrglied (18) durchdringbar ist.

9. Mischkapsel nach einem der vorhergehenden Ansprüche, dadurch gekennzeichnet, daß die Mischkammer (12) eine nach oben weisende Stützfläche (51) aufweist, auf welcher das Sperrglied (18) abstützbar ist.

10. Mischkapsel nach einem der vorhergehenden Ansprüche dadurch gekennzeichnet, daß die Ringnut (52) an der Mischkammer (12) durch zwei vorspringende Ringwülste (48, 50) gebildet ist, zwischen denen das Sperrglied (18) gehaltert ist, wobei das Sperrglied (18) an bevorzugt zwei einander gegenüber liegenden Stellen den Boden der Ringnut (52) und damit die Wand der Mischkammer (12) durchgreift.

11. Mischkapsel nach einem der vorhergehenden Ansprüche, dadurch gekennzeichnet, daß das Sperrglied (18) federnd nach innen wirkende Seitenschenkel (54) aufweist, die in einer Ringnut (40) des Kolbens (14) einrastbar sind.

12. Mischkapsel nach einem der vorhergehenden Ansprüche, dadurch gekennzeichnet, daß der Kolben (14) glockenförmig ausgebildet ist, wobei der oben liegende Boden des Kolbens (14) eine Stempelstange (44) des Stempels (16) führt.

13. Mischkapsel nach Anspruch 12, dadurch gekennzeichnet, daß der Stempel (16) in dem glockenförmig ausgebildeten Kolben (14) vollständig versenkbar ist und die Länge des Stempels (16) einschließlich der Stempelstange (44) der Länge des Kolbens (14) entspricht.

14. Mischkapsel nach einem der vorhergehenden Ansprüche, dadurch gekennzeichnet, daß die Länge der Mischkammer (12) die Länge des Kolbens (14) erheblich übersteigt und der Kolben (14) vollständig in der Mischkammer (12) aufnehmbar ist.

15. Mischkapsel nach einem der vorhergehenden Ansprüche, dadurch gekennzeichnet, daß die Abmessungen und Materialien von Stempel (16) und Kolben (14) einerseits und von Kolben (14) und Mischkammer (12) andererseits so gewählt sind, daß die Reibung des Kolbens (14) gegenüber der Mischkammer (12) geringer ist als die Reibung des Stempels (16) gegenüber dem Kolben (14).

16. Mischkapsel nach einem der vorhergehenden Ansprüche, dadurch gekennzeichnet, daß eine Stempelstange (44) des insbesondere in einer Signalfarbe gehaltenen Stempels (14) außen glatt und dünn und frei von einer Griffhandhabe ausgebildet ist, so daß sie ohne Werkzeug nicht aus dem Kolben (14) wieder herausziehbar ist.

17. Mischkapsel nach einem der vorhergehenden Ansprüche, dadurch gekennzeichnet, daß die Ausbringöffnung der Mischkammer (12) insbesondere mit einem Verschlußstab (20) luftdicht verschlossen ist und die Reibung des Stempels (16) in dem Kolben (14) größer ist als die Kraft aufgrund der Kompression der neben den Dentalmassen (28; 38) verbleibenden Luft beim vollständigen Einschieben des Stempels (16) in den Kolben (14).

## Claims

1. A mixing capsule for dental compounds, having a mixing chamber in which a piston (14) is guided in sliding movement, a ram (16) being arranged for sliding movement in the piston (14), and the mixing chamber (12) has an applicator opening (22) through which the dental compound can be applied, wherein when pressure acts on the ram (16) a sliding movement takes place between the piston (14) and the ram (16), on the one hand, and the mixing chamber (12) and the piston (14), on the other hand, for the application of the dental compound, wherein the piston (14) has at least one recess (40) in which a locking member (18) engages which can be removed manually for the application of the dental compound (28,38), characterised in that the locking member (18) is substantially U-shaped and the central arm of the locking member (18) is extended to form a grip handle (60), and in that a circumferential annular groove (52) is formed on the mixing chamber (12), in which the locking member (18) can be accommodated with two lateral arms (54).

2. A mixing capsule according to Claim 1, characterised in that the recess (40) is in the form of an annular groove and the locking member (18) is in the form of a disposable part.

3. A mixing capsule according to any one of the preceding Claims, characterised in that the locking member (18) is a part which can be fitted into the recess (40) and, in particular, engaged in the annular groove, which part is separate from the mixing capsule (12) and also from an applicator device.

4. A mixing capsule according to any one of the preceding Claims, characterised in that the recess (40) has externally on the piston (14) a step (41) with a downwardly facing shoulder, i.e. facing towards the applicator opening (22).

5. A mixing capsule according to any one of the preceding Claims, characterised in that the recess (40) has externally on the piston (14) a step (43) with an upwardly facing shoulder, i.e. towards the end of the ram (16).

6. A mixing capsule according to any one of the preceding Claims, characterised in that the locking member (18) supports the piston (14) on one step (41;43) on two opposite sides.

7. A mixing capsule according to any one of Claims 1 to 6, characterised in that the locking member (18) supports the piston (14) at two locations offset with respect to one another.

8. A mixing capsule according to any one of the preceding Claims, characterised in that the mixing chamber (12) has a lateral passage opening (54) which can be penetrated by the locking member (18).

9. A mixing capsule according to any one of the preceding Claims, characterised in that the mixing chamber (12) has an upwardly facing support surface (51), on which the locking member (18) can be supported.

10. A mixing capsule according to any one of the preceding Claims, characterised in that the annular groove (52) on the mixing chamber (12) is formed by two projecting annular beads (48,50), between which the locking member (18) is retained, wherein at preferably two opposite locations the locking member (18) extends through the bottom of the annular groove (52) and thus the wall of the mixing chamber (12).

11. A mixing capsule according to any one of the preceding Claims, characterised in that the locking member (18) has a resiliently inwardly acting lateral arm (54) which can be engaged in an annular groove (40) of the piston (14).

12. A mixing capsule according to any one of the preceding Claims, characterised in that the piston (14) is bell-shaped, the upperlying base of the piston (14) guiding a ram rod (44) of the ram (16).

13. A mixing capsule according to Claim 12, characterised in that the ram (16) can be fully retracted in the bell-shaped piston (14) and the length of the ram (16) including the ram rod (44) corresponds to the length of the piston (14).

14. A mixing capsule according to any one of the preceding Claims, characterised in that the length of the mixing chamber (12) considerably exceeds the length of the piston (14) and the piston (14) can be entirely accommodated in the mixing chamber (12).

15. A mixing capsule according to any one of the preceding Claims, characterised in that the dimensions and materials of the ram (16) and the piston (14), on the one hand, and of the piston (14) and the mixing chamber (12), on the other hand, are chosen so that the friction of the piston (14) with respect to the mixing chamber (12) is lower than the friction of the ram (16) with respect to the piston (14).

16. A mixing capsule according to any one of the preceding Claims, characterised in that the ram rod (44) of the ram (14), which in particular is kept in a signal colour, is formed so as to be externally smooth and thin and free of any grip handle so that it cannot be withdrawn from the piston (14) without an implement.

17. A mixing capsule according to any one of the preceding Claims, characterised in that the applicator opening of the mixing chamber (12) is sealed airtight with a sealing bar (20) and the friction of the ram (16) in the piston (14) is greater than the force arising from the compression of the air remaining close to the dental compounds (28;38), when the ram (16) is fully inserted into the piston (14).

## Revendications

1. Capsule mélangeuse pour produits dentaires, comportant une chambre de mélange dans laquelle un piston (14) est guidé de façon à pouvoir coulisser, un poinçon (16) étant disposé dans le piston (14) de façon à pouvoir coulisser et la chambre de mélange (12) comportant un orifice de distribution (22) qui permet de distribuer le produit dentaire, une pression exercée sur le poinçon (16) entraînant un mouvement de coulissement entre le piston (14) et le poinçon (16) d'une part et entre la chambre de mélange (12) et le piston (14) d'autre part en vue d'évacuer le produit dentaire, le piston (14) comportant au moins un évidement (40) dans lequel s'engage un organe de blocage (18) pouvant être enlevé manuellement en vue de distribuer le produit dentaire (28, 38), caractérisée en ce que l'organe de blocage (18) est sensiblement en forme de U et la branche centrale de l'organe de blocage (18) est prolongée pour former une poignée (60) et que la chambre de mélange (12) comporte une rainure annulaire (52) circulaire dans laquelle peut être logé l'organe de blocage (18) avec deux branches latérales (54).

2. Capsule mélangeuse selon la revendication 1, caractérisée en ce que l'évidement est réalisé sous forme d'encoche annulaire (40) et l'organe de blocage (18) sous forme de pièce perdue.

3. Capsule mélangeuse selon une des revendications précédentes, caractérisée en ce que l'organe de blocage (18) est une pièce qui est séparée de la capsule mélangeuse (10) ainsi que d'un dispositif de distribution et qui peut être enfichée dans l'évidement (40) et notamment enclenchée dans l'encoche annulaire.

4. Capsule mélangeuse selon une des revendications précédentes, caractérisée en ce que l'évidement (40) comporte extérieurement sur le piston (14) un gradin (41) avec un épaulement dirigé vers le bas, c'est-à-dire vers l'orifice de distribution (22).

5. Capsule mélangeuse selon une des revendications précédentes, caractérisée en ce que l'évidement (40) comporte extérieurement sur le piston (14) un gradin (43) avec un épaulement dirigé vers le haut, c'est-à-dire vers l'extrémité du poinçon (16).

6. Capsule mélangeuse selon une des revendications précédentes, caractérisée en ce que l'organe de blocage (18) soutient le piston (14) sur deux côtés opposés au niveau d'un gradin (41 ; 43).

7. Capsule mélangeuse selon une des revendications 1 à 6, caractérisée en ce que l'organe de blocage (18) soutient le piston (14) à deux endroits décalés l'un par rapport à l'autre.

8. Capsule mélangeuse selon une des revendications précédentes, caractérisée en ce que la chambre de mélange (12) comporte latéralement un orifice de passage (54) qui peut être traversé par l'organe de blocage (18).

9. Capsule mélangeuse selon une des revendications précédentes, caractérisée en ce que la chambre de mélange (12) comporte une surface d'appui (51) dirigée vers le haut sur laquelle l'organe de blocage (18) peut prendre appui.

10. Capsule mélangeuse selon une des revendications précédentes, caractérisée en ce que la rainure annulaire (52) sur la chambre de mélange (12) est formée par deux renflements annulaires (48, 50) saillants entre lesquels est fixé l'organe de blocage (18), l'organe de blocage (18) traversant de préférence à deux endroits situés en vis-à-vis le fond de la rainure annulaire (52) et ainsi la paroi de la chambre de mélange (12).

11. Capsule mélangeuse selon une des revendications précédentes, caractérisée en ce que l'organe de blocage (18) comporte des branches latérales (54) élastiques agissant vers l'intérieur qui peuvent être enclenchées dans une encoche annulaire (40) du piston (14).

12. Capsule mélangeuse selon une des revendications précédentes, caractérisée en ce que le piston (14) est en forme de cloche, le fond du piston (14) situé en haut guidant une tige (44) du poinçon (16).

13. Capsule mélangeuse selon la revendication 12, caractérisée en ce que le poinçon (16) peut descendre complètement dans le piston (14) en forme de cloche et la longueur du poinçon (16) y compris la tige (44) de celui-ci correspondant à la longueur du piston (14).

14. Capsule mélangeuse selon une des revendications précédentes, caractérisée en ce que la longueur de la chambre de mélange (12) est nettement supérieure à la longueur du piston (14) et le piston (14) peut être logé en totalité dans la chambre de mélange (12).

15. Capsule mélangeuse selon une des revendications précédentes, caractérisée en ce que les dimensions et les matériaux du poinçon (16) et du piston (14) d'une part et du piston (14) et de la chambre de mélange (12) d'autre part sont choisis de telle manière que le frottement du piston (14) sur la chambre de mélange (12) est plus faible que le frottement du poinçon (16) sur le piston (14).

16. Capsule mélangeuse selon une des revendications précédentes, caractérisée en ce qu'une tige (44) du poinçon (16) comportant notamment une couleur de signalisation est extérieurement lisse et mince et ne comporte pas de poignée de sorte qu'elle ne peut pas être extraite du piston (14) sans outil.

17. Capsule mélangeuse selon une des revendications précédentes, caractérisée en ce que l'orifice de distribution de la chambre de mélange (12) est fermé de manière étanche à l'air en particulier avec une tige d'obturation (20) et le frottement du poinçon (16) dans le piston (14) est supérieur à la force résultant de la compression de l'air subsistant à côté des produits dentaires (28 ; 38) lorsque le poinçon (16) est complètement introduit dans le piston (14).
